# EUROPÄISCHE PATENTSCHRIFT

(11) **EP 0 222 220 B1**
(45) Veröffentlichungstag und Bekanntmachung des Hinweises auf die Patenterteilung: **27.07.1994**
(21) Anmeldenummer: 86114662.9
(22) Anmeldetag: 22.10.1986
(51) Int. Cl.: B29C 43/18, B29C 67/08, B29C 67/04

(54) **Verfahren zur Herstellung dreidimensionaler Versteifungsteile aus schmelzbarem Kunststoffpulver und Aufbringen dieser Teile auf Substrate, insbesondere Leder**
Method for producing tridimensional reinforcing parts from a fusible plastic powder, and application of these parts to a substrate, in particular leather
Procédé pour fabriquer des pièces de renfort tridimensionnelles à partir de poudre fusible en matière plastique et application de ces pièces sur des substrats, en particulier du cuir

(30) Priorität: 08.11.1985 DE 3539573
(43) Veröffentlichungstag der Anmeldung: 20.05.1987
(73) Patentinhaber: Giulini Chemie GmbH, D-67029 Ludwigshafen (DE)
(72) Erfinder: Brehmer, Harald, Dipl.-Ing., D-6701 Neuhofen (DE); Wilding, Emil, D-6701 Birkenheide (DE)

(56) Entgegenhaltungen:
- DE-A- 3 444 365
- FR-A- 2 538 271
- GB-A- 2 134 418
- US-A- 4 503 091

## Beschreibung

Gegenstand der vorliegenden Erfindung ist ein Verfahren, genauer zwei Verfahrensvarianten, zur Herstellung von dreidimensionalen Versteifungselemente aus schmelzbarem Kunststoffpulver oder aus schmelzbares Kunststoffpulver enthaltenden Pulvergemischen, bei dem das Pulver oder Pulvergemisch auf einen Hilfsträger aufgetragen wird, über Wärme und Druck gesintert und auf ein zu versteifendes Substrat, insbesondere auf Teile eines Schuhschaftes übertragen und mit dem Substrat verbunden wird sowie eine Einrichtung zur Durchführung dieses Verfahrens.

Die Verwendung von thermoplastischem Versteifungsmaterial in der Schuh-, Bekleidungs- und Täschnerindustrie ist bereits seit langem bekannt. In den meisten Fällen wird es in Bahnform hergestellt und in daraus hergestellten Zuschnitten, z.B. in der Schuhindustrie zum Versteifen des Fersenbereichs, gegebenenfalls auch Spitzenbereichs, verwendet. Zu diesem Zweck werden die Zuschnitte, hier auch Versteifungselemente und Versteifungsteile genannt, dem aus dem Bahnmaterial mit Stanzmessern ausgestanzt und mindestens noch an der Seite, welche nicht im "Zwickeinschlag" liegt, ausgedünnt (geschärft). Die Zuschnitte sind unter Hitzeeinwirkung verformbar und sollen nach Verformung und Abkühlung sowohl eine gute Flexibilität als auch gute Formhaltung gewährleisten.

Die Aktivierung und Fixierung des Versteifungsteiles auf dem Lederschaft erfolgt in Abhängigkeit von den Eigenschaften des thermoplastischen Kunststoffes entweder durch Wärmeeinwirkung oder Lösungsmittelbehandlung. Bei Schuhspitzenverstärkungen erhalten die Versteifungsteile häufig noch ein- oder beidseitig einen Heißschmelzkleberaufstrich und können nunmehr mit einem heißen Preßstempel auf den zu verstärkenden Teil des Schaftes augebügelt werden
Das thermoplastische Versteifungsmaterial in Bahnform kann bekanntlich auf verschiedene Weise hergestellt werden, z.B. durch Beschichten oder Imprägnieren von textilen Gebilden wie Gewebe, Gewirke, Vliese oder Gewirre, mit Dispersionen, Lösungen oder Schmelzen von thermoplastischen Kunststoffen. Gemäß der US PS 3 427 733 können die Bahnen auch durch Extrusion von thermoplastischen Kunststoffen oder Extrusionsbeschichtung von textilen Bahnen erzeugt werden.

Aus der DE 26 21 195 A1 sind weiterhin Versteifungsmaterialien und -teile bekannt geworden, die durch Aufschmelzen von pulverförmigen Mischungen aus Kunststoff, Füllstoff und gegebenenfalls weiteren Hilfsstoffen auf textile Träger hergestellt werden. Auch können Formteile ohne Trägermaterial aus den pulverförmigen Mischungen erzeugt werden.

Wesentliches Kennzeichen dieser Erfindung ist, daß die Korngrößenverteilung der Füllstoffe und der schmelzbaren pulverförmigen Kunststoffe vergleichbar ist. Auf diese Weise kann erreicht werden, daß die Füllstoffmenge beträchtlich gesteigert werden konnte, bis zu 100 Vol. % bezogen auf das Volumen des Kunststoffpulvers. Allerdings lassen sich nach diesem Verfahren Versteifungsmaterialien nur in der Bahnform herstellen. Aus diesen Bahnen müssen die gebrauchsfertigen Kappen dann durch Stanzen und Schärfen erzeugt werden.

Bekannt ist aus der US PS 3 973 285 auch schon, das Versteifungsmaterial im geschmolzenen Zustand auf ein Schuhoberteil zu bringen, das am Rand eingespannt ist und gehalten wird. Die Verfahrensstufen "Bahnenmaterialfertigung", Schmelzkleberbeschichtung", "Stanzen", "Schärfen" und "Aufbügeln" werden auf diese Weise eliminiert.

Das vorstehende Verfahren wird zwar in der Praxis zur Herstellung von preiswerten Schuhen eingesetzt, jedoch weist es wegen der Dünnflüssigkeit des Versteifungsmaterials bei 190 °C eine Anzahl von Unzulänglichkeiten auf, beispielsweise Crackungserscheinungen der Schmelze bei Stillstand, Fadenbildung, schlechte Haftung u.a.

Aufgrund verschiedener, äußerst kritischer Verfahrensparameter sind dem Fachmann bei der Auswahl der Kunststoffschmelzen weiterhin sehr enge Grenzen gesetzt. Hierfür in Frage kommende Stoffe werden meistens aus wirtschaftlichen Gründen in der Praxis nicht eingesetzt.

Bekannt ist schließlich aus der DE-OS 2 159 226 auch schon ein Verfahren, bei welchem das aufgeschmolzene Versteifungsmaterial zunächst in der 1. Station einer Maschine in eine Form zur Bildung der gewünschten Kappe gegossen wird. Anschließend wird die Form in die 2. Station gebracht, in welcher der nicht gekühlte, noch klebrige Bereich der Kappe unter Druck mit dem zu versteifenden Schuhoberteil verklebt wird. Auch dieses Verfahren arbeitet nicht zufriedensstellend und zeigt noch erhebliche Mängel.

Die Nachteile des Standes der Technik sollen sich gemäß DE 33 47 237 A1 mit einer Maschine überwinden lassen, bei welcher zur Herstellung der Versteifungselemente in vorbestimmter Gestalt anstelle des bisher eingesetzten geschmolzenen Kunststoffes ein schmelzbares Kunststoffpulver eingesetzt werden kann. Wie bei dem Verfahren der DE 26 21 195 A1 wird auf der Maschine in 3 Verfahrensstufen gearbeitet, nämlich Pulverauftrag in bestimmter Gestalt, Erwärmung bis zum Schmelzen und Abkühlung unter Druck. Im Siebdruckverfahren wird gemäß Stand der Technik das schmelzbare Pulver in Form des gewünschten Versteifungselementes auf ein Aufnahmeband (Hilfsträger) gebracht, dann in der Wärmestation der Maschine geschmolzen und schließlich in der Pressenstation mit dem zu vesteifenden Zuschnitt für ein Schuhoberteil verklebt und unter Druck abgekühlt, wobei der zu versteifende Zuschnitt allerdings mit der Empfängerseite nach unten zeigt. Darin wird ein Nachteil gesehen.

Wegen der beobachteten Schwierigkeiten nach Pulverauftrag, langen Taktzeiten in der Wärmestation sowie hohen Schmelztemperaturen und Positionsschwierigkeiten bei der Übertragung des Versteifungselementes von dem Aufnahmeband (Hilfsträger) auf das zu versteifende Schuhoberteil ist auf dieser Maschine die Herstellung von Versteifungselementen in vielen Fällen noch problematisch und nicht zufriedenstellend gelöst. Die hohen Schmelztemperaturen des Kunststoffpulvers (191 bis 260 °C) erfordern z.B. Aufheizzeiten bis etwa 25 Sek. und mehr.

Verfahren zum Ausrichten der zu verstärkenden Substrate beim Arbeiten auf den vorstehenden Maschinen sind in der DE 34 44 365 A1 beschrieben. Der konstruktive Aufwand zur Übertragung des geschmolzenen Verstärkungsmaterials vom Hilfträger auf die Empfängerseite des zu verstärkenden Schaftteiles sind jedoch erheblich und in vielen Fällen wirtschaftlich nicht vertretbar.

Gegenstand der vorliegenden Erfindung ist daher ein neues Verfahren zur Herstellung eines dreidimensionalen Versteifungselementes aus einem schmelzbaren Kunststoffpulver oder aus einem schmelzbares Kunststoffpulver enthaltenden Pulvergemisch, dessen Auftrag auf einen Hilfsträger im Schablonendruckverfahren und anschließende Übertragung des gebildeten Versteifungselementes auf das zu versteifende Substrat, insbesondere auf Teile eines Schuhschaftes erfolgt, sowie eine Einrichtung zur Durchführung dieses Verfahrens. Überraschenderweise können mit dem neuen Verfahren die eingangs geschilderten Schwierigkeiten weitgehend beseitigt werden.

Das neue Verfahren ist zum einen dadurch gekennzeichnet, daß der Pulverauftrag mit Hilfe einer Schablone erfolgt und daß der Druck und die Wärme mittels eines Preßstempels aufgebracht werden, und daß das Versteifungselement durch den Preßstempel vom Hilfsträger abgehoben und auf dem Preßstempel weiter erwärmt wird und daß durch anschließendes Absenken des Preßstempels das Versteifungselement auf das unter dem Preßstempel angebrachte Substrat übertragen und mit ihm verbunden wird.

Gemäß einer zweiten Verfahrensvariante wird so vorgegangen, daß der Pulverauftrag mit Hilfe einer Schablone erfolgt und daß der Druck und die Wärme mittels eines Preßstempels aufgebracht werden, und daß das Versteifungselement durch den Preßstempel vom Hilfsträger abgehoben und auf dem Preßstempel weiter erwärmt wird und daß das Versteifungselement auf ein Hilfssubstrat übertragen wird und daß nach Lösen des Hilfssubstrates vom Versteifungselement das Versteifungselement auf das Substrat übertragen wird und mit ihm verbunden wird.

Dem neuen Verfahren, das ein Doppeltransferverfahren ist, liegt die Erkenntnis zugrunde, daß ein derartiges Verfahren dann mit Erfolg ausführbar ist, wenn
a.) die Adhäsion des angeschmolzenen versinterten Versteifungselementes beim Abheben des heißen Preßstempels zu der Oberfläche des Preßstempels größer ist als die Adhäsion des versinterten Versteifungselementes zum Hilfsträger und die Kohäsionskräfte der versinterten Pulverteilchen bereits größer sind als die Adhäsionskräfte zum Hilfsträger und zur Oberfläche des Preßstempels;
b.) die Adhäsion zur Oberfläche des Preßstempels während der Verweilzeit des Versteifungselementes am Preßstempel größer ist als die Masse des Vesteifungselementes , die auch kleiner sein muß als die Kohäsionskräfte in der Schmelze;
c.) beim Transfer des geschmolzenen Versteifungselementes auf das zu versteifende Substrat oder Hilfsträger die Adhäsion der Schmelze zu letzteren größer ist als zur Oberfläche des Preßstempels und die Kohäsionskräfte in dem geschmolzenen Versteifungselement größer sind als dessen Adhäsion zur Oberfläche des Preßstempels.

Besonders vorteilhaft kann das Doppeltransferverfahren dann durchgeführt werden, wenn das Gewicht aus dem zu versteifenden Substrat (Empfängersubstrat) und dem Versteifungselement größer ist, als die Adhäsion des geschmolzenen Versteifungsteils zur Oberfläche des Preßstempels. Bei einer derartigen Ausführungsform kann selbst auf eine Halterung des Empfängersubstrates auf der Unterlage verzichtet werden.

Der Vorteil des neuen Verfahrens wird vor allem darin gesehen, daß durch den doppelten Transfer des Versteifungselementes sowohl das Verfahren als auch die Einrichtung zu seiner Durchführung betriebssicherer und wesentlich einfacher werden. Das zu versteifende Substrat (Schuhteil) liegt bei dem Doppeltransferverfahren stets auf einer stabilen Unterlage, so daß das zu übertragende Versteifungselement immer von oben nach unten aufgepreßt wird und nicht von unten nach oben. Die Positionierung des Substrates und Aufschmelzen des Versteifungselementes auf das Substrat ist damit unkompliziert geworden.

Erfindungsgemäß kann in der zweiten Transferstufe das geschmolzene Versteifungselement auch zunächst auf ein Hilfssubstrat (z.B. Papier) übertragen werden, von welchem sich das Element nach Abkühlung leicht abheben läßt. So hergestellte Versteifungsteile können später separat bei entsprechender Aktivierung, beispielsweise Aufbügeln, Einkleben mit Hilfe von Klebstoffen oder Lösungsmitteln, auf Empfängersubstrate aufgebracht werden.

Besonders geeignete Hilfsträger für die erste Transferstufe sind Bahnen bzw. Platten aus Silikonkautschuk. Auch können die Hilfsträger unterhalb der Schablone konkav sein, also Vertiefungen aufweisen, so daß gewölbte Versteifungselemente entstehen. Auch andersartig ausgebildete Hilfsträger, z.B. keilförmig ausgehöhlte, sind einsetzbar. Das Verfahren ist auf plane Hilfsträger nicht beschränkt.

Als Hilfssubstrat in der zweiten Transferstufe zur Übertragung des heißen Versteifungsmaterials vom Preßstempel eignen sich sowohl Bahnen als auch Platten, etwa solche aus PVC oder PUR-Transferbeschichtungspapier, Aluminium, Polyester (Mylar^{R} oder Polyethylenterephthalat z.B. Hostaphan^{R}).

Die Kontaktseite des Preßstempels wird vorzugsweise mit einem Überzug aus Polytetrafluoroethylen (Teflon^{R}) versehen, jedoch ist der Erfindungsgegenstand auf diese Ausführungsformen nicht beschränkt.

Nach einer anderen Ausführungsform der Erfindung kann das aufgeschmolzene Versteifungselement auch in der zweiten Transferstufe mit einem textilen Trägerteil fest verbunden werden, und zwar derart, daß das textile Teil nach Übertragung des Versteifungsteiles auf das zu versteifende Substrat bzw. Hilfsträger in einem zusätzlichen Verfahrensschritt (Arbeitstakt) auf das Versteifungselement aufgepreßt und fixiert wird. Das textile Teil kann hier auch das Schuhinnenfutter sein.

Gemäß einer besonders einfachen Ausführungsform der Erfindung wird die zum Pulverauftrag erforderliche Schablone mit einem Stanzmesser, das in vielen Formvarianten beim Hersteller von Versteifungsteilen bzw. in den Schuhfabriken vorrätig ist, hergestellt, und zwar derart, daß die gewünschte Versteifungsform mit dem passenden Stanzmesser aus dem Schablonenmaterial ausgestanzt wird, beispielsweise aus einer glasfaserverstärkten Polypropylen-Platte.

Als rieselfähiges Kunststoffpulvergemisch kann beispielsweise ein Gemisch aus schmelzbarem Kunststoffpulver und pulverförmigem Füllstoff entsprechend den Angaben in DE 26 21 195 A1 eingesetzt werden, wobei der pulverförmige Füllstoff eine mit der Korngrößenverteilung des Kunststoffpulvers vergleichbare Korngrößenverteilung von 50 bis 600 µm, insbesondere 100 bis 400µm, aufweist. Das Kunststoffpulver kann gemäß Erfindung jedoch auch ohne Füllstoff oder in Mischung mit anderen Kunststoffteilchen eingesetzt werden. Die bei der zuletzt genannten Ausführungsform eingesetzen "anderen" Kunststoffteilchen sind Polymere, die in einem höheren Temperaturbereich schmelzen und damit im ungelösten Zustand die Funktion eines Füllstoffes übernehmen. Geeignete Gemische sind beispielsweise Gemische aus Hochdruck- und Niederdruckpolyethylen und solche aus einem Ethylen-Vinylacetat-Copolymerisat und einem Polyethylen. Als geeignete niedrig schmelzende Kunststoffe werden an dieser Stelle auch Polycaprolacton und ionomere Harze genannt.

Als Füllstoffe können selbstverständlich auch Holzmehl. Korkmehl, Kreide, Talkum, Kieselerde u.a. organische und anorganische Stoffe eingesetzt werden, und zwar in einer Menge bis zu 100 Volumenprozent, bezogen auf das Volumen des Kunststoffpulvers.

Nach einer weiteren vorteilhaften Ausführungsform der Erfindung kann das dreidimensionale Versteifungselement auch mehrschichtig aufgebaut sein. Zu diesem Zweck werden gleiche oder unterschiedliche Schmelzschichten nacheinander aufgepresst.

Das Doppeltransferverfahren kann sowohl stationär, als auch kontinuierlich ausgeführt werden. Bei der zulezt genannten Ausführungsform kann das Verfahren auf einer Taktstrasse ausgeführt, die beispielsweise aus einem endlosen, in mindestens zwei Arbeitsstationen unterteiltes Förderband (Hilfsträger) besteht, wobei die eine Arbeitsstation mit einer Pulverauftragseinsrichtung und die andere mit einer Preßeinrichtung versehen ist.

Die kontinuierliche Taktstrasse kann nach einer Ausgestaltung der Erfindung z.B. auch aus 2 endlosen Förderbändern (Hilfsträgern) bestehen, zwischen denen sich eine beheizte Walze bewegt, die den Pulverauftrag von dem einen Hilfsträger abnimmt und nach Aufschmelzung auf den zweiten Hilfsträger überträgt.

Anhand der beiliegenden schematischen Zeichnungen soll nun der Gegenstand der Erfindung noch näher erläutert werden.

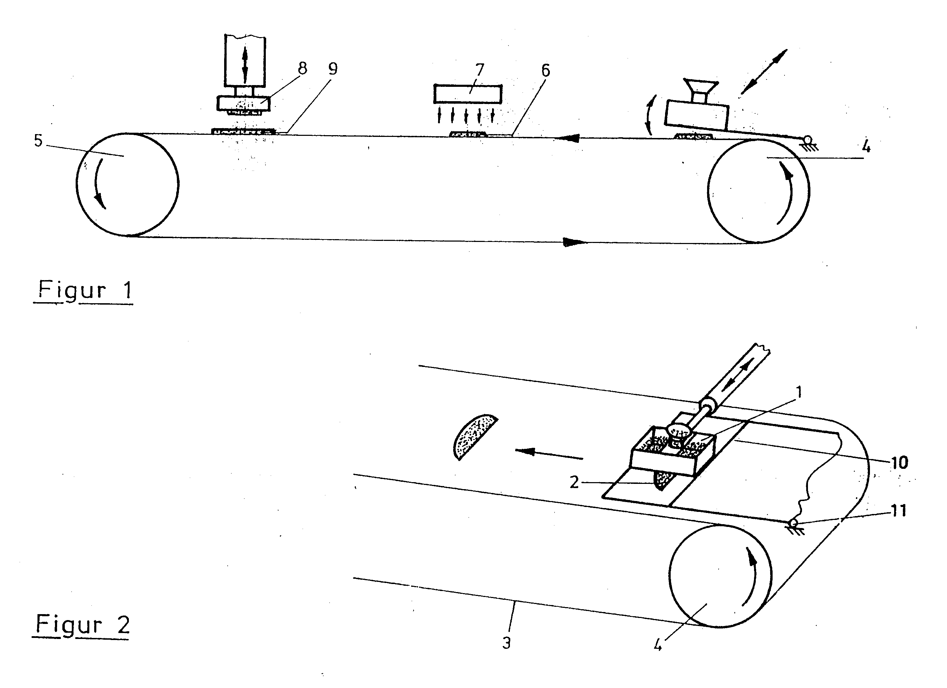

Figuren 1 und 2 zeigen eine Einrichtung zur Durchführung des Verfahrens gemäß den Ansprüchen.

Mit 1 ist in der Figur 2 die Pulverauftragseinrichtung zum Aufbringen des Kunststoffpulvers durch den geformten Ausschnitt der Schablone 2 auf den Hilfsträger (Förderband) 3 bezeichnet. Das endlose Förderband 3 wird von der Rolle 4 getrieben und bei der Umlenkrolle 5 wieder in die 1. Arbeitsstation umgelenkt. Die Schablone 2, die im Beispiel eine 1,5 mm dicke, mit Glasfasern verstärkte Polypropylenplatte ist und in welche mittels Stanzmesser die gewünschte Form des Versteifungselementes ausgestanzt worden ist, kann auf das Förderband aufgelegt werden. Sie ist mit der Pulverauftragseinrichtung 1 fest verbunden und kann nach Pulverauftrag 6 vom Förderband abgehoben werden.

Die Pulverauftragseinrichtung 1 ist im Beispiel ein Rakelkasten aus Edelstahlblech, der mindestens so breit ist, daß er die gesamte Breite des Schablonenaussschnittes unter Auffüllung des Hohlraumes mit Kunststoffpulver überquert und außerdem beidseitig in Führungsschienen geführt werden kann. Die Führungsschienen, in Fig. 2 mit 10 angedeutet, verlaufen quer zur Bewegungsrichtung des Förderbandes, wobei der von Schiene und Bewegungsrichtung gebildete Winkel α 10 bis 170 °, insbesondere 85 bis 95 ° beträgt.

Der Rakelkasten wird seitlich und oben in Führungsschienen quer zur Bewegungsrichtung des Förderbandes geführt. Pro Drucktakt wird der mit Kunststoffpulver gefüllte Kasten einmal über den ausgestanzten Ausschnitt der Schablone geführt, wobei als Antrieb ein Pneumatikzylinder eingesetzt ist. Nach Füllung des vom Förderband und Schablonenausschnitt gebildeten Hohlraumes mit Kunststoffpulver wird die Schablone abgehoben und der Pulverauftrag in die 2. Arbeitsstation befördert. Danach erfolgt durch Druckabsenkung die Rückbewegung des Rakelkastens und ein weiterer Pulverauftrag auf das Förderband.

In der gezeigten Ausführungsform, in Figur 2 sind der in Schienen geführte Rakelkasten 1 und die Schablone 2 einseitig vom Band abhebbar und in einem Drehpunkt gelagert, der etwas hinter der Rolle 4 liegt.

Befindet sich der Pulverauftrag 6 in der 2. Arbeitsstation (Figur 1), so wird er über den Wärmestrahler 7, der eine beliebige Wärmequelle sein kann, vorgewärmt, und zwar soweit, daß mindestens die Teilchen an der Oberfläche aneinander haften (versintern). Dabei ist eine starke Luftbewegung zu vermeiden.

Beim nächsten "Drucktakt" wandert der Pulverauftrag 6 in die 3. Arbeitsstation und wird dort von dem beheizten Preßstempel 8 verdichtet, nach Versinterung der Kunststoffteilchen an diesen angeschmolzen und vom Förderband abgehoben. Während der Verweilzeit auf dem Preßstempel 8, insbesondere im oberen Totpunkt, wird der Schmelzvorgang fortgesetzt und dabei die gewünschte Viskositätserniedrigung erzielt. Das zu versteifende Schuhteil 9 befindet sich dabei unterhalb des Preßstempels 8 und übernimmt während eines weiteren Preßvorganges das Versteifungselement 6 von dem Preßstempel. Nach Abheben des Preßstempels wird das versteifte Schuhteil entweder in einem erneuten Preßtakt mit dem Innenfutter verklebt oder der Weiterverarbeitung nach Abnahme vom Band zugeführt. An dieser Stelle ist auch erwähnenswert, daß der Ausschnitt in der Schablone in der Regel etwas kleiner gewählt werden muß, als die gewünschte Größe des Fertigproduktes, da durch Pressen und Fließen des Kunststoffpulvers eine Vergrößerung unvermeidbar ist.

Der Gegenstand der Erfindung ist selbstverständlich nicht auf die in den Figuren gezeigte Ausführungsform beschränkt. Das erfindungsgemäße Verfahren kann auch mit einer andersartig konzipierten Einrichtung ausgeführt werden.

## Patentansprüche

1. Verfahren zur Herstellung eines dreidimensionalen Versteifungselementes aus einem schmelzbaren Kunststoffpulver oder aus einem schmelzbares Kunststoffpulver enthaltenden Pulvergemisch, bei dem das Pulver oder Pulvergemisch auf einen Hilfsträger aufgetragen wird, über Wärme und Druck gesintert und auf ein zu versteifendes Substrat, insbesondere auf Teile eines Schuhschaftes, übertragen und mit dem Substrat verbunden wird, dadurch gekennzeichnet, daß der Pulverauftrag mit Hilfe einer Schablone erfolgt und daß der Druck und die Wärme mittels eines Preßstempels aufgebracht werden, daß das Versteifungselement durch den Preßstempel vom Hilfsträger abgehoben und auf dem Preßstempel weiter erwärmt wird und daß durch anschließendes Absenken des Preßstempels das Versteifungselement auf das unter den Preßstempel angebrachte Substrat übertragen und mit ihm verbunden wird.

2. Verfahren zur Herstellung eines dreidimensionalen Versteifungselementes aus einem schmelzbaren Kunststoffpulver oder aus einem schmelzbares Kunststoffpulver enthaltenden Pulvergemisch, bei dem das Pulver oder Pulvergemisch auf einen Hilfsträger aufgetragen wird, über Wärme und Druck gesintert und auf ein zu versteifendes Substrat, insbesondere auf Teile eines Schuhschaftes, übertragen und mit dem Substrat verbunden wird, dadurch gekennzeichnet, daß der Pulverauftrag mit Hilfe einer Schablone erfolgt und daß der Druck und die Wärme mittels eines Preßstempels aufgebracht werden, daß das Versteifungselement durch den Preßstempel vom Hilfsträger abgehoben und auf dem Preßstempel weiter erwärmt wird, daß das Versteifungselement auf ein Hilfssubstrat übertragen wird und daß nach Lösen des Hilfssubstrats vom Versteifungselement das Versteifungselement auf das Substrat übertragen und mit ihm verbunden wird.

3. Verfahren nach den Ansprüchen 1 und 2, dadurch gekennzeichnet, daß der Pulverauftrag nach dem Auftragen auf den Hilfsträger mit einem textilen Zuschnitt, der eine offene Struktur aufweist, versehen wird.

4. Verfahren nach den Ansprüchen 1 bis 3, dadurch gekennzeichnet, daß das dreidimensionale Versteifungselement mehrschichtig aufgebaut ist.

5. Verfahren nach einem der Ansprüche 1 bis 4, dadurch gekennzeichnet, daß als Schablone eine Schablone mit keilförmigem Querschnitt eingesetzt wird.

6. Verfahren nach den Ansprüchen 1 bis 5, dadurch gekennzeichnet, daß als Hilfssubstrat Trennpapier eingesetzt wird.

7. Verfahren nach den Ansprüchen 1 bis 5, dadurch gekennzeichnet, daß ein Hilfssubstrat eingesetzt wird, das ganz oder an der Oberfläche aus Aluminium, Polyester oder Polyethylenterephthalat besteht.

8. Verfahren nach den Ansprüchen 1 bis 7, dadurch gekennzeichnet, daß ein Hilfsträger für den Pulverauftrag eingesetzt wird, der ganz oder an der Oberfläche aus Silikonkautschuk besteht.

9. Einrichtung zur Durchführung des Verfahrens nach den Ansprüchen 1, 2 oder 3 mit einem Auftragsaggregat (1), einem Hilfsträger und mit Mitteln zum Aufbringen von Druck und Wärme, wobei durch das Auftragsaggregat über eine Schalbone (2) das Pulver auf den Hilfsträger auftragbar ist, dadurch gekennzeichnet, daß das Mittel zum Aufbringen von Druck und Wärme aus einer Preßvorrichtung mit einem beheizbaren Preßstempel (8) besteht.

10. Einrichtung nach Anspruch 9, dadurch gekennzeichnet, daß der Hilfsträger mit einer Vertiefung versehen ist.

11. Einrichtung nach den Ansprüchen 9 und 10, dadurch gekennzeichnet, daß der Preßstempel mit einer Oberflächenbeschichtung aus Polytetra-fluorethylen versehen ist.

12. Einrichtung nach Anspruch 11, dadurch gekennzeichnet, daß zwischen Auftragsaggregat und Preßvorrichtung eine Wärmequelle angeordnet ist.

## Claims

1. A method of preparing a three-dimensional reinforcing element from a fusible plastics powder or from a powder mixture containing a fusible plastic powder, wherein the powder or powder mixture is applied to an auxiliary substrate, sintered by means of heat and pressure and transferred to a substrate which is to be reinforced, particularly to part of an item of footwear, and is attached to the substrate, characterising that the powder is applied by means of a template and the pressure and heat are applied by means of a pressing die, the reinforcing element is lifted away from the auxiliary substrate by the pressing die and is further heated on the pressing die and by subsequently lowering the pressing die the reinforcing element is transferred to the substrate, which has been placed below the pressing die, and is attached thereto.

2. A method of preparing a three-dimensional reinforcing element from a fusible plastics powder or from a powder mixture containing a fusible plastics powder, wherein the powder or powder mixture is applied to an auxiliary substrate, sintered by means of heat and pressure and transferred to a substrate which is to be reinforced, more particularly to part of an item of footwear, and is attached to the substrate, characterised in that the powder is applied by means of a template and in that the pressure and heat are applied by means of a pressing die, the reinforcing element is lifted away from the auxiliary substrate by means of the pressing die and is further heated on the pressing die, the reinforcing element is transferred to an auxiliary substrate and after the auxiliary substrate has been detached from the reinforcing element the reinforcing element is transferred to the substrate and attached thereto.

3. Method according to claims 1 and 2, characterised in that after application to the auxiliary substrate the application of powder is provided with a textile blank which has an open structure.

4. Method according to claims 1-3, characterised in that the three-dimensional reinforcing element is of multi-layered construction.

5. Process according to one of claims 1-4, characterised in that the template used is a template having a wedge-shaped cross section.

6. Method according to claims 1-5, characterised in that separating paper is used as the auxiliary substrate.

7. Method according to claims 1-5, characterised in that an auxiliary substrate is used which consists in its entirety, or on its surface, of aluminium, polyester or polyethyleneterephthalate.

8. Method according to claims 1-7, characterised in that an auxiliary substrate for the application of powder is used which consists in its entirety or on its surface of silicone rubber.

9. Apparatus for carrying the process according to claim 1, 2 or 3 with an application unit (1), an auxiliary substrate and means for applying pressure and heat, wherein the application unit is able to apply powder to the auxiliary substrate through a template (2), characterised in that the means for applying pressure and heat consist of a pressing device having a heatable pressing die (8).

10. Apparatus according to claim 9, characterised in that the auxiliary substrate is provided with a depression.

11. Apparatus according to claims 9 and 10, characterised in that the pressing die is provided with a surface coating of polytetrafluoroethylene.

12. Apparatus according to claim 11, characterised in that a heat source 7 is provided between the application unit and the pressing device.

## Revendications

1. Procédé pour fabriquer une pièce de renfort tridimensionnelle à partir d'une poudre fusible en matière plastique, ou d'un mélange pulvérulent à base de poudre fusible én matière plastique, dans lequel la poudre ou le mélange pulvérulent sont appliqués sur un support auxiliaire, frittés par chaleur et pression, et transférés sur un substrat devant être renforcé, en particulier sur des parties d'une tige de chaussure, et fusionnés avec le substrat, caractérisé en ce que l'application de la poudre se fait à l'aide d'un gabarit et en ce que la pression et la chaleur sont appliquées à l'aide d'un piston, en ce que la pièce de renfort est soulevée du support auxiliaire par le piston et tenue chauffée sur ce dernier, et en ce que l'abaissement ultérieur du piston a pour effet de transférer la pièce de renfort sur le substrat placé sous le piston, et de la fusionner avec ce substrat.

2. Procédé pour fabriquer une pièce de renfort tridimensionnelle à partir d'une poudre fusible en matière plastique, ou d'un mélange pulvérulent à base de poudre fusible en matière plastique, dans lequel la poudre ou le mélange pulvérulent sont appliqués sur un support auxiliaire, frittés par chaleur et pression, et transférés sur un substrat devant être renforcé, en particulier sur des parties d'une tige de chaussure, et fusionnés avec le substrat, caractérisé en ce que l'application de la poudre se fait à l'aide d'un gabarit et en ce que la pression et la chaleur sont appliquées à l'aide d'un piston, en ce que la pièce de renfort est soulevée du support auxiliaire par le piston et tenue chauffée sur ce dernier, en ce que la pièce de renfort est transférée sur un substrat auxiliaire, et en ce qu'après détachement du substrat auxiliaire de la pièce de renfort, celle-ci est transférée sur le substrat et fusionnée avec ce dernier.

3. Procédé suivant les revendications 1 et 2, caractérisé en ce qu'après application sur le support auxiliaire, la couche de poudre est recouverte d'une pièce découpée en matière textile, qui présente une structure ouverte.

4. Procédé suivant l'une quelconque des revendications 1 à 3, caractérisé en ce que la pièce de renfort tridimensionnelle présente plusieurs épaisseurs.

5. Procédé suivant l'une quelconque des revendications 1 à 4, caractérisé en ce qu'on utilise, pour gabarit, un gabarit à section transversale en forme de cale ou de coin.

6. Procédé suivant les revendications 1 à 5, caractérisé en ce qu'on utilise, pour substrat auxiliaire, du papier-transfert.

7. Procédé suivant les revendications 1 à 5, caractérisé en ce qu'on utilise un substrat auxiliaire se composant, en totalité ou seulement en surface, d'aluminium, de polyester ou de polyéthylène téréphtalate.

8. Procédé suivant les revendications 1 à 7, caractérisé en ce qu'on utilise, pour appliquer la poudre, un substrat auxiliaire se composant en totalité ou seulement en surface, de caoutchouc silicone.

9. Dispositif pour la mise en oeuvre du procédé suivant les revendications 1, 2 et 3, comportant un applicateur (1), un support auxiliaire et des moyens permettant l'application de pression et de chaleur, la poudre pouvant être appliquée par l'applicateur sur le support auxiliaire grâce à un gabarit (2), dispositif caractérisé en ce que le moyen d'application de pression et de chaleur est constitué par un organe de pression comportant un piston (8) chauffable.

10. Dispositif suivant la revendication 9, caractérisé en ce que le support auxiliaire présente un enfoncement.

11. Dispositif suivant les revendications 9 et 10, caractérisé en ce que le piston présente une couche superficielle de polytétrafluoréthylène.

12. Dispositif suivant la revendication 11, caractérisé un ce qu'une source de chaleur (7) est agencée entre l'applicateur et l'organe de pression.
